# EUROPEAN PATENT APPLICATION

(11) **EP 1 182 173 A1**
(43) Date of publication of application: **27.02.2002**
(21) Application number: 01301471.7
(22) Date of filing: 19.02.2001
(51) Int. Cl.: C03B 37/012

(54) **Preform for optical fibres and methods for making the preform and optical fibres**

(30) Priority: 08.08.2000 US 644603
(71) Applicant: LUCENT TECHNOLOGIES INC., Murray Hill, New Jersey 07974-0636 (US)
(72) Inventor: Dong, Xiaoyuan, Suwanee, Georgia, 30024 (US); Hong, Siu-Ping, Alpharetta, Georgia, 30022 (US)
(74) Representative: Watts, Christopher Malcolm Kelway, Dr.

(57) **Abstract**

Disclosed is a preform and a method of its manufacture and a method of making optical fiber from the preform. The method includes the steps of providing an overclad tube (54), positioning a plurality of preform core rods (52) in the overclad tube end-to-end, and heating the overclad tube and the plurality of preform core rods to collapse the overclad tube onto the plurality of preform core rods to form an overclad optical fiber preform. In this manner, the interfaces between the ends of the stacked preform core rods tend to be, for example, less than approximately 1 millimiter (mm). Once the plurality of preform core rods are stacked within the overclad tube, one of the ends (58) of the overclad tube is sealed and a pressure gradient or vacuum is established across the overclad tube. In the presence of the pressure gradient, heat is provided to the combined overclad tube and preform core rods to collapse the overclad tube onto the preform core rods to form a preform. From this preform, optical fiber is drawn, for example, in a conventional manner.

## Description

### Background of the Invention

### 1. Field of the Invention

The invention relates to methods and apparatus for making optical fiber preforms. More particularly, the invention relates to Rod-In-Tube (RTT) methods and apparatus for making optical fiber preforms using multiple preform core rods.

### 2. Description of the Related Art

Optical fibers typically are fabricated by heating and drawing a portion of an optical preform comprising a refractive core surrounded by a protective glass cladding. Conventionally, several processes exist for fabricating preforms, including a modified chemical vapor deposition (MCVD) process. See, for example, U.S. Pat. No. 4,217,027, which is issued to MacChesney et al. on Aug. 12, 1980 and co-owned with this application. Another conventional process for fabricating preforms is the vapor axial deposition (VAD) process.

In the MCVD process, precursor gases such as SiCl₄ and GeCl₄ pass through a rotating substrate tube of silica glass. A torch heats the tube from the outside as the precursor gases pass therethrough, causing deposition of submicron-sized glass particles on the inside surface of the tube. Movement of the torch along the longitudinal axis of the tube in a plurality of passes builds up layer upon layer of glass to provide a preform tube. Once a suitable number of layers have been deposited, the preform tube is heated to cause it to collapse into a solid rod typically referred to as the core rod, the preform core rod, or the preform rod.

The preform core rod then is inserted into a glass overclad tube, which is collapsed onto the preform core rod using heat and a pressure gradient present about the overclad tube to produce an overclad preform. Such process typically is referred to as the Rod-In-Tube (RIT) process. See, for example, US 4,820,322, which is co-owned with this application.

The overclad tube is collapsed onto the preform core rod while the overclad tube and the preform core rod are mounted in a vertical lathe. Alternatively, according to the Overclad During Draw (ODD) technique, collapse of the overclad tube onto the preform core rod occurs in the draw tower furnace, which also is used to draw optical fiber from the resulting optical fiber preform. In this manner, the overclad tube is collapsed progressively onto the preform core rod just prior to the resulting preform portion having optical fiber drawn therefrom.

Typically, the size of overclad preforms made by RIT processes are determined by, for example, the size of equipment used to manufacture the preform core rods and/or the overclad tubes. However, increasing the length of the overclad preform is one manner in which to increase the yield of optical fiber drawn from the overclad preform. Because of such potential yield increase, the lathes used to rotate the substrate tubes have been made longer to manufacture preform core rods having greater length. The longer preform core rods are, in turn, used to make overclad preforms having greater length, which preforms yield more optical fiber per preform. However, limitations in MCVD processes, for example, gas flow limitations, effectively limit the overall length of preforms that are manufactured by MCVD processes.

Therefore, conventionally, overclad preforms are made longer by joining overclad preforms end-to-end. Such methods involve cutting, grinding, polishing and cleaning the ends of the overclad preforms to be joined. The ends are then spliced together using, for example, conventional techniques. However, the resulting splice joints between joined preforms typically are undesirably rough and distorted. Such a splice joint represents a relatively large portion (for example, greater than approximately 2 centimeters) of distorted preform glass that tends to produce reduced quality optical fiber when that portion of the preform is drawn. Often those portions of the optical fiber drawn from the preform splice joint regions must be discarded.

Accordingly, what is desired are methods and apparatus for manufacturing optical fiber overclad preforms that are longer, but do not generate as much reduced quality fiber as conventional techniques.

### Summary of the Invention

The invention is as defined by the claims. Embodiments of the invention include a method and apparatus for making an optical fiber preform and for making optical fiber from the preform. The method includes the steps of providing an overclad tube, positioning a plurality of preform core rods in the overclad tube, and heating the overclad tube and the plurality of preform core rods to collapse the overclad tube onto the plurality of preform core rods to form an overclad optical fiber preform. According to embodiments of the invention, the plurality of preform core rods are stacked, for example, end-to-end, within the overclad tube. In this manner, the interfaces between the ends of the stacked preform core rods tend to be, for example, less than approximately 1 millimeter (mm). Once the plurality of preform core rods are stacked within the overclad tube, one of the ends of the overclad tube is sealed and a pressure gradient or vacuum is established across the overclad tube. In the presence of the pressure gradient, heat is provided to the combined overclad tube and preform core rods to collapse the overclad tube onto the preform core rods to form a preform. From this preform, optical fiber is drawn, for example, is a conventional manner.

### Brief Description of the Drawings

In the drawings:
Fig. 1 is a cross-sectional view of a conventional preform core rod positioned within an overclad tube prior to progressively collapsing the overclad tube around the preform core rod to make an overclad preform;
Fig. 2 is a cross-sectional view of a plurality of preform core rods stacked and sealed within an overclad tube prior to collapsing the overclad tube therearound to make an overclad preform according to embodiments of the invention;
Fig. 3 is a cross-sectional view of a plurality of preform core rods stacked within an overclad tube prior to collapsing the overclad tube therearound to make an overclad preform according to an alternative embodiment of the invention; and
Fig. 4 is a simplified block diagram of a method for making overclad optical fiber preforms using multiple preform core rods, and making optical fiber therefrom according to embodiments of the invention.

### Detailed Description

In the following description similar components are referred to by the same reference numeral in order to enhance the understanding of the invention through the description of the drawings. Also, although specific features, configurations and arrangements are discussed hereinbelow, it should be understood that such is done for illustrative purposes only. A person skilled in the relevant art will recognize that other steps, configurations and arrangements are useful without departing from the spirit and scope of the invention.

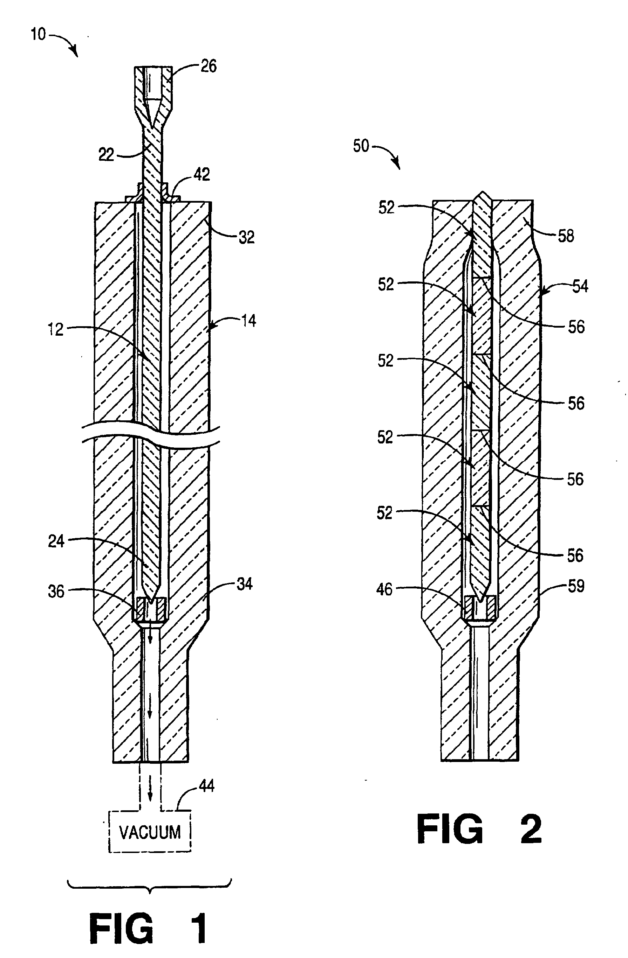

Referring now to Fig. 1, illustrated is an apparatus 10, comprising a preform core rod 12 and an overclad tube 14, used to make an overclad preform, for example, according to a conventional Rod-In-Tube (RIT) process. The preform core rod 12 is positioned within the overclad tube 14 prior to the collapse of the overclad tube 14 around the preform core rod 12.

The preform core rod 12 is made by any suitable process, including conventional processes such as modified chemical vapor deposition (MCVD) or vapor axial deposition (VAD). The preform core rod 12 has a proximal end 22 and a distal end 24, and often is made with a handle 26 at the proximal end 22. The handle 26 facilitates maneuvering the preform core rod 12 into the overclad tube 14.

The overclad tube 14 has a first end 32 into which the preform core rod 12 is inserted and a second end 34 configured for mounting into a chuck or other appropriate holding device. For arrangements in which the first end 32 of the overclad tube 14 is collapsed onto the preform core rod 12 (for example, for ODD processes), a quartz disc 36 is positioned within the second end 34 of the overclad tube 14 to provide support for the preform core rod 12. Alternatively, for non-ODD processes, an adjustable support rod or other supporting or spacer means occupies the second end 34 of the overclad tube 14 to maintain the relative position of the preform core rod 12 and the overclad tube 14 during the collapse of the overclad tube 14 onto the preform core rod 12.

Once the preform core rod 12 is positioned as desired within the overclad tube 14, the proximal end 22 of the preform core rod 12 is sealed off, for example, by a seal 42 or other appropriate means. A vacuum or other pressure gradient then is established across the region between the preform core rod 12 and the overclad tube 14, for example, by operably coupling a vacuum source 44 to the second end 34 of the overclad tube 14. The overclad tube 14 is heated while the pressure gradient is maintained across the region between the preform core rod 12 and the overclad tube 14, thus causing the overclad tube 14 to collapse around the preform core rod 12, for example, in accordance with a conventional Rod-In-Tube (RIT) process.

Other processing variations exist for manufacturing optical fiber preforms. For example, in conventional RIT processes, the collapse of the overclad tube onto the preform core rod typically is performed while the overclad tube and the preform core rod are mounted in a vertical lathe. Alternatively, the collapse of the overclad tube on the preform core rod is performed in a draw tower furnace, which also is used to draw optical fiber from the resulting optical fiber preform. Such collapse is accomplished by inserting the preform core rod into an overclad tube and then moving the combined preform core rod and overclad tube coaxially through the draw tower furnace. This Overclad During Draw (ODD) technique causes the collapse of the overclad tube onto the preform core rod prior to the drawing of the fiber. Another processing variation includes successive RIT overclads on the same preform core rod, resulting in double overclad optical fiber preforms.

In conventional RIT arrangements, the length of the preform is approximately 50-100 centimeters (cm). However, as discussed hereinabove, preforms having greater length are manufactured, for example, by joining conventional preforms end-to-end. That is, the preforms ends to be joined are cut, ground (if necessary), polished and cleaned before being spliced together, for example, in a conventional manner.

The splice joints produced by conventional methods for joining overclad preforms end-to-end tend to be larger than approximately 2 cm in axial length. Splice joints of this size typically are undesirable since the glass viscosity at the preform splice joint varies to the extent that relatively significant variations in cladding occur when the preform splice joint portion of the preform is drawn into optical fiber. Such variations tend to reduce the quality of the glass and increase the likelihood of the fiber breaking during the draw. Often those portions of the fiber are discarded. Also, because a 2 cm region of preform translates into approximately 4.6 kilometers (km) of optical fiber for a preform having a 60 millimeter (mm) diameter and approximately 10.2 kilometers (km) of optical fiber for a preform having a 90 millimeter (mm) diameter, it is desired that the axial length of preform splice joints be kept relatively small.

According to embodiments of the invention, a method and apparatus for making optical fiber preforms and optical fiber therefrom includes stacking a plurality of preform core rods in an overclad tube and collapsing the overclad tube around the preform core rods, for example, according to a RIT process. The multiple core rod optical fiber preform is used to draw optical fiber, for example, according to conventional fiber drawing techniques. Such techniques include, for example, ODD processes and double-overcladding or other multiple-overcladding processes.

According to embodiments of the invention, the preform core rods are stacked within the overclad tube. Because of imperfections such as air bubbles and slightly off-center alignment between stacked preform core rods, an interface therebetween, which subsequently draws into reduced quality glass, typically is less than approximately 1 mm in axial length. Such is compared with conventional arrangements having splice joints, for example, greater than approximately 2 cm in axial length. Also, unlike conventional preform splicing methods, according to embodiments of the invention, the preform core rods are stacked within an otherwise conventional overclad tube. Thus, joining interfaces occur only between the preform core rods, not the entire preform. This also tends to reduce the impact of the interfaces on the optical fiber that is drawn from the preform, compared to conventional joining techniques in which entire preforms (that is, core rods and overcladding) are spliced together.

Referring now to Fig. 2, shown is a cross-sectional view of an apparatus 50 used to make an overclad preform according to embodiments of the invention. The apparatus 50 includes a plurality of preform core rods 52 stacked within an overclad tube 54. The stacked preform core rods 52 result in one or more interfaces 56 therebetween. Once the plurality of preform core rods 52 are stacked within the overclad tube 54, a first end 58 of the overclad tube 54 is sealed off, for example, by a seal or other appropriate means, such as by partially collapsing a portion of the first end 58 of the overclad tube 54 onto one or more of the preform core rods 54. Fig. 2 shows the apparatus 50 once the overclad tube 54 has been sealed off, but prior to completely collapsing the overclad tube 54 around the plurality of preform core rods 52.

A pressure gradient is established across the region between the preform core rods 52 and the overclad tube 54, for example, by coupling a vacuum source or other suitable means to a second end 59 of the overclad tube 54. The overclad tube 54 is heated while the pressure gradient is maintained across the region between the preform core rods 52 and the overclad tube 54 to collapse the overclad tube 54 around the preform core rods 52.

According to embodiments of the invention, two or more preform core rods 52 are cut and stacked, for example, coaxially, within the overclad tube 54. In this manner, no grinding or polishing steps are necessary. This compares favorable with conventional methods, in which ends of the preform (that is, the core rod and the overclad tube collapsed therearound) are cut, then ground, polished and cleaned before finally being spliced together end-to-end. Also, embodiments of the invention have to cut only the preform core rods, which typically have a diameter of approximately 15 mm. By comparison, conventional arrangements have to cut the preform rod and the overcladding, which collectively have a diameter of approximately 60-90 cm. Thus, in many respects, embodiments of the invention are less labor intense than conventional preform joining techniques.

As mentioned hereinabove, according to embodiments of the invention, stacking the preform core rods 52 within the overclad tube 54 results in the interfaces between ends of the stacked preform core rods being relatively small compared to splice joints of conventional arrangements. For example, according to embodiments of the invention, interfaces between the stacked preform core rods are approximately 1 mm or less, which translates into no more than approximately 230 meters (m) (for a 60 mm diameter preform) or approximately 520 m (for a 90 mm diameter preform) of optical fiber upon draw that might be of reduced quality. By comparison, conventional preform splice joints are at least approximately 2 cm, which, as discussed previously herein, translates into approximately 4.6 km of optical fiber for a preform having a 60 mm diameter and approximately 10.2 km of optical fiber for a preform having a 90 mm diameter upon draw. Thus, arrangements according to embodiments of the invention typically produce less optical fiber having reduced quality than do conventional arrangements.

Moreover, the quality of the optical fiber drawn from the joined portions of the preform core rods according to embodiments of the invention is much better than that drawn from conventional preform arrangements, for example, because conventional arrangements join the ends of entire preforms (that is, the core rod and the overclad tube). This compares with arrangements according to embodiments of the invention, which stack the ends of only the core rods (and not the overclad tube) within an overclad tube and thus have interfaces only between preform core rods. Also, because only the preform core rods have interfaces therebetween, preforms made according to embodiments of the invention are less likely to break when drawn into optical fiber than conventionally-joined preforms. Thus, according to embodiments of the invention, the preform core rod interfaces have less of an impact on reducing the overall quality of optical fiber drawn therefrom than the splice joints of conventional configurations.

According to embodiments of the invention, the preform core rods 52 typically are stacked within an overclad tube 54 that typically is longer than conventional overclad tubes (although such is not necessary). For example, it is within the scope of embodiments of the invention to stack two or more preform core rods 52 in an overclad tube 54 that has conventional length. However, in an effort to increase the length of the overclad preform, for example, for reasons previously discussed herein, the overclad tube 54 is approximately 2 meters long or even longer according to some embodiments of the invention. Such length compares with conventional overclad tubes, which typically are approximately 1 meter in length.

Embodiments of the invention provide greater flexibility in overcladding processes. For example, conventionally, a preform core rod portion that is much shorter in length than an overclad tube often is discarded rather than be overclad with a relatively expensive overclad tube that will not be fully used. However, according to embodiments of the invention, several smaller preform core rod portions are stacked within an overclad tube that has a conventional size, for example, approximately 1 m, or is even longer, for example, 2 m.

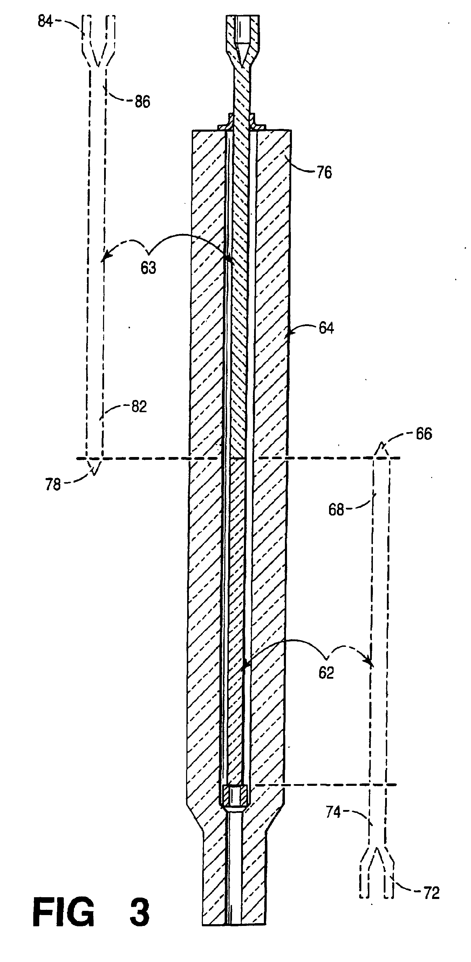

Referring now to Fig. 3, shown is an embodiment of the invention in which a pair of preform core rods 62, 63 are stacked within an overclad tube 64, prior to collapsing the overclad tube 64 therearound to make an overclad preform. The first core rod 62 is prepared for positioning in the overclad tube 64 by cutting a tip 66 off of a distal end 68 thereof and by cutting a handle portion 72 off of a proximal end 74 thereof, for example, as shown. The proximal end 74 of the prepared first core rod 62 is inserted into a first end 76 of the overclad tube 64 (for example, as shown). Alternatively, the distal end 68 of the prepared first core rod 62 is inserted into the first end 76 of the overclad tube 64.

The second core rod 63 is prepared for insertion into the overclad tube 64 by cutting a tip 78 off of a distal end 82 thereof. A handle portion 84 typically remains part of a proximal end 86 of the second core rod 63, for example, as shown. The prepared second core rod 63 is positioned within the overclad tube 64, for example, by inserting its distal end 82 into the first end 76 of the overclad tube 64 in such a way that the distal end 82 of the second core rod 63 stacks onto, for example, the distal end 68 of the first preform core rod 62. Once the preform core rods 62, 63 are stacked in the overclad tube 64, for example, as shown, the overclad tube 64 is collapsed around the preform core rods 62, 63, for example, as discussed hereinabove.

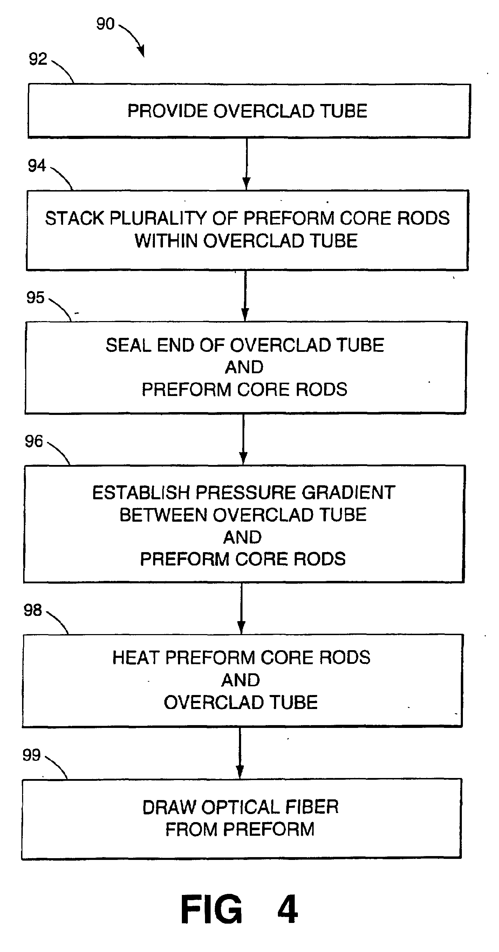

Referring now to Fig. 4, shown is a simplified block diagram of a method 90 for making overclad optical fiber preforms using multiple preform core rods, and making optical fiber therefrom. One step 92 of the method 90 is to provide an overclad tube. As discussed previously herein, the overclad tube has conventional dimensions or, alternatively, is greater in length than conventionally-sized overclad tubes.

Another step 94 is to position a plurality of preform core rods in the overclad tube. For example, the plurality of preform core rods are stacked end-to-end within the overclad tube. As discussed previously herein, according to embodiments of the invention, the stacked preform core rods have interfaces therebetween that are approximately 1 mm in axial length.

Once the plurality of preform core rods are stacked within the overclad tube, another step 95 is to seal off one end of the preform core rod stack and the overclad tube. The end is sealed, for example, by a seal or by collapsing a portion of the overclad tube onto a portion of one or more stacked preform core rods (see, for example, Fig. 2). Another step 96 is to establish a pressure gradient between the preform core rods and the overclad tube, for example, using a vacuum source or other suitable means. The pressure gradient is established such that the pressure outside of the overclad tube is greater than the pressure between the outside of the preform core rods and the inside of the overclad tube. For example, the pressure gradient is within the range from approximately 0.10 to approximately 0.50 atmospheric pressure.

Another step 98 in the method 90 is to heat the stacked preform core rods and the overclad tube, for example, within the range from approximately 1600-1700° C. According to an embodiment of the invention, the heating step 98 applies heat, for example, to successive axial portions of the combined preform core rods and overclad tube, that is, along the length of the overclad tube.

The heating step 98 causes the overclad tube to collapse onto the preform core rods stacked therein. Thus, according to embodiments of the invention, a multiple core rod optical fiber preform is formed using a stacked plurality of preform core rods and a single overclad tube, compared to conventional arrangements that splice join one or more overclad tube preforms.

Referring again to Fig. 4, another step 99 is to draw optical fiber from the heated preform. The drawing step 99 is performed, for example, in a conventional manner. That is, the drawing step 99 is performed once the inventive optical fiber preform has been manufactured. Alternatively, in an ODD-type process, the drawing step 99 is performed as the overclad optical fiber preform is being formed, that is, as the overclad tube is being collapsed onto the preform core rods within the draw tower furnace. More specifically, the heat source used to heat and collapse the overclad tube around the preform core rods is a draw tower furnace and the overclad tube with the preform core rods stacked therein is moved operably through the draw tower furnace. In this manner, the overclad tube collapses on the preform core rods using a single heat source and a single heating step. The resulting multiple rod optical fiber preform then is used to draw optical fiber therefrom, for example, according to conventional ODD process steps.

It will be apparent to those skilled in the art that many changes and substitutions can be made to the embodiments of the methods and apparatus for making multiple core rod optical fiber preforms and optical fiber therefrom herein described without departing from the invention as defined by the appended claims. For example, embodiments of the invention are useful with double-overclad techniques where one or more preform core rods and a plurality of inner overclad tubes are stacked within a single, second (outer) overclad tube. Also, embodiments of the invention are useful with other multi-overclad processes, especially when the stacked preform core rods and the stacked overclad layers are stacked within a single, outermost overclad tube.

## Claims

1. A method (90) for making an optical fiber preform, comprising the steps of:
providing (92) at least one overclad tube;
positioning a preform core rod in the overclad tube; and
heating (98) the overclad tube and preform core rod in such a way that the overclad tube collapses onto the preform core rod to form an overclad optical fiber preform,
**CHARACTERIZED IN THAT**
the positioning step further comprises stacking (94) a plurality of preform core rods in the overclad tube, and
the heating step further comprises heating the overclad tube and the plurality of preform core rods in such a way that the overclad tube collapses onto the plurality of preform core rods to form an overclad optical fiber preform.

2. The method as recited in claim 1, wherein the stacking step further comprises stacking the plurality of preform core rods within the overclad tube in such a way that the overclad tube and the plurality of preform core rods are substantially coaxial.

3. The method as recited in claim 1, wherein the plurality of preform core rods are stacked in such a way that an interface is formed between coupling ends of at least one pair of preform core rods, and wherein the axial length of the interface is less than approximately 1 millimeter (mm).

4. The method as recited in claim I, further comprising the step of creating a pressure gradient across the overclad tube wherein the pressure outside the overclad tube is greater than the pressure inside the overclad tube.

5. The method as recited in claim 1, further comprising the step of drawing an optical fiber from the overclad optical fiber preform.

6. The method as recited in claim 5, wherein the drawing step and the heating step are performed using the same heat source.

7. The method as recited in claim 1, further comprising the step of cutting at least one of the ends of at least one of the plurality of preform core rods before the plurality of preform core rods are stacked within the overclad tube.

8. An apparatus for making an optical fiber preform, the apparatus comprising:
at least one overclad tube; and
a plurality of preform core rods dimensioned to fit end-to-end within the overclad tube, wherein the plurality of preform core rods are stacked within the overclad tube.

9. The apparatus as recited in claim 8, wherein the plurality of preform core rods are stacked within the overclad tube in such a way that the overclad tube and the plurality of preform core rods are substantially coaxial.

10. The apparatus as recited in claim 8, further comprising a spacer positioned within the overclad tube for supporting one of the plurality of preform core rods within the overclad tube.
